# EUROPEAN PATENT SPECIFICATION

(11) **EP 0 634 094 B1**
(45) Date of publication and mention of the grant of the patent: **07.10.1998**
(21) Application number: 94202001.7
(22) Date of filing: 11.07.1994
(51) Int. Cl.: A01F 15/08

(54) **Apparatus and method for monitoring bale shape in a round baler**
Verfahren und Vorrichtung um das Bilden eines Ballens in einer Rundballenpresse zu überwachen
Méthode et appareil pour contrôler la forme de la balle dans une presse à ballesrondes

(30) Priority: 12.07.1993 US 89533; 12.07.1993 US 89545
(43) Date of publication of application: 18.01.1995
(73) Proprietor: NEW HOLLAND BELGIUM N.V., B-8210 Zedelgem (BE)
(72) Inventor: Wagstaff, Robert A., Lancaster, PA 17601 (US); Crego, John B., New Holland, PA 17557 (US)
(74) Representative: Vandenbroucke, Alberic

(56) References cited:
- EP-A- 0 060 956
- FR-A- 2 579 063
- US-A- 4 517 795
- US-A- 4 850 271

## Description

The present invention relates generally to balers, typically referred to as "round balers", which form cylindrical bales of crop material, and more particularly to apparatus and method for monitoring the degree of compaction of crop material in the chamber in which the bale is being formed.

Round balers generally have a bale forming chamber defined by a pair of opposing side walls associated with an array of side-by-side belts, transverse slats trained on chains, a plurality of rolls or a combination of these various elements, e.g. rolls and belts. During field operation, windrowed crop material such as hay or straw is picked up from the ground and fed into a fixed or variable diameter chamber. The hay or straw is then rolled into a cylindrical package, wrapped with twine, net or the like and ejected onto the ground for subsequent handling.

Because it is not uncommon for windrows of crop material to be uneven and typically narrower than the width of the bale forming chamber, it is necessary for the operator of some prior art balers to observe the shape of the bale being formed and weave the baler in a generally zigzag pattern to uniformly distribute the crop material across the bale being formed and thereby avoid poorly shaped bales. This approach relies on the experience of the operator to determine when to laterally shift the position of the baler. The lack of exactness, inability to observe the bale shape, reliance on operator skill and operator fatigue all contribute to the possibility of improper feeding causing misshaped bales.

In belt type balers where a substantially uniform diameter is not maintained, improper tracking occurs resulting in belt jamming and damage. In addition, the uneven shape of the bale causes low density areas on the bale periphery which could result in premature deterioration of the bale during field storage, where it is exposed to weather extremes, i.e., the low density area does not shed water as well as an evenly balanced and uniformly compacted area.

Many present day balers of the various types mentioned above recognize the need for enhancing bale shape. Systems are employed that address the problem of conveniently and consistently forming bales having a substantially uniform diameter throughout their length. This has been accomplished to a certain degree by utilizing monitoring arrangements to ascertain parameters that in turn are used in the control of functions that have a direct bearing on the shape of bales formed. A bale shape controlling system of this type is disclosed in US-A-4.748.801. This system includes first and second indicator lights, and bale diameter monitoring apparatus for alternately generating signals in the lights in response to predetermined incremental expansion of the bale forming chamber. This enables the operator to position the baler to feed crop to one side of the bale forming chamber when a signal is generated in one indicator and to position the baler to feed crop to the other side of the chamber when a signal is generated in the other indicator.

In the prior art systems disclosed in US-A-4.224.867 and US-A-4.517.795, a monitor senses belt tension at both sides of the bale being formed in the chamber and generates signals to the operator directly related to the relative diameters. This enables the operator to steer the baler in a manner that will feed crop material to the area in the chamber that is deficient in an attempt to prevent the bale from becoming improperly shaped.

A similar system is shown in US-A-4.850.271. Herein one sensor is used to sense the general diameter of the bale and three other sensors are used to monitor the bale shape. The latter sensors sense belt tension at the sides and the middle of the bale and provide an output which is directly related to the relative diameters of the different bale portions. A microprocessor combines this output with the output of the first sensor to display a graph representative of the general shape of the periphery of the bale to the operator.

In another system, disclosed in US-A-4.686.820 tension on the belts is utilized to generate a signal that is used to control apparatus that varies the path of crop being fed to the bale forming chamber. The baler is driven straight down the windrow, crop material is picked up and as it is being conveyed toward the chamber the stream of hay or straw is deflected into one of three regions of the chamber based on diameter differentials.

In yet another prior art system, disclosed in US-A-5.131.214, a crop loading monitor is employed to assist the operator in the formation of round bales. The monitor in this instance comprises an interval timer which signals the operator to direct crop material to alternate sides of the baler at preselected time intervals.

The existing round baler monitoring systems described above either monitor the general baler diameter, various relative diameters or the time interval during which crop is being fed.

An important object of the present invention is to provide a novel monitoring system for the bale forming chamber of a round baler that improves uniformity of shape and compaction and thereby enhances overall baler performance.

According to one aspect of the present invention, a round baler is provided, comprising:
- a bale forming chamber, defined between a pair of side walls;
- means for feeding crop material into said bale forming chamber; and
- a crop loading monitor, comprising signal means and sensor means, operably coupled with said signal means and monitoring the compactness of a bale being formed in said bale forming chamber.

Said baler is characterized in that said sensor means comprise at least one sensor which is mounted on one of said pair of side walls.

Preferably the sensor means comprise leaf springs which extend from both side walls into the path of the crop material during the formation of the bale and are forced toward the walls when the compactness in the vicinity of the springs increases.

According to another aspect of the present invention a method is provided of forming bales in a round baler having a bale forming chamber, including a pair of side walls and a crop pick-up for feeding crop material into said bale forming chamber, said method comprising the steps of:
- positioning said round baler to pick up crop material with said pick-up; and
- feeding said picked up material into said bale forming chamber;
- sensing the compactness of said crop material in a certain region of the bale, which is formed after said crop material is fed into said bale forming chamber;
- generating a signal indicative of the compactness of said crop material in said region; and
- repositioning said round baler in response to said signal to maintain said compactness at a predetermined level.

Said method is characterized in that said region is at an end surface of the bale, adjacent said side walls (9, 19).

A baler in accordance with the present invention will now be described in greater detail, by, way of example, with reference to the accompanying drawings, in which:
Figure 1 is a diagrammatic side elevational view of a round baler in which the present invention is embodied;
Figure 2 is similar to Figure 1 with the bale forming chamber in its partly full position;
Figure 3 is also similar to Figure 1 with the bale forming chamber in its full bale position;
Figure 4 is a view taken in the direction of arrows 4-4 in Figure 1;
Figure 5 is a view taken in the direction of arrows 5-5 in Figure 4; and
Figure 6 is a schematic diagram of the electrical circuit in which the sensors of the present invention are connected.

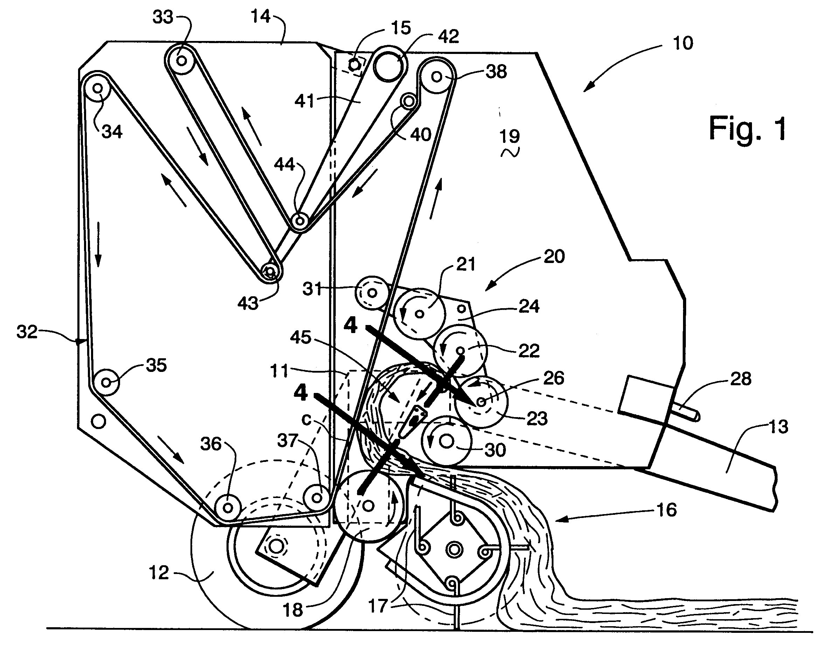

Referring to the drawings for a detailed description of the preferred embodiment of the invention, Figure 1 shows a round baler 10 of the type having an expandable chamber defined in part by belts and rollers, as disclosed in US-A-4.870.812, in which the preferred embodiment of the present invention is readily incorporated. Baler 10 has a main frame 11, including a pair of side walls, supported by a pair of wheels 12 (only one shown). A forwardly mounted tongue 13 is provided on main frame 11 for connection to a tractor. Pivotally connected to a side wall 19 by a pair of stub shafts 15 is a tailgate 14 which is closed during bale formation. A pick-up 16, mounted on main frame 11, includes a plurality of tines 17 movable in a predetermined path to lift crop material from the ground and deliver it rearwardly toward a floor roll 18, rotatably mounted on main frame 11.

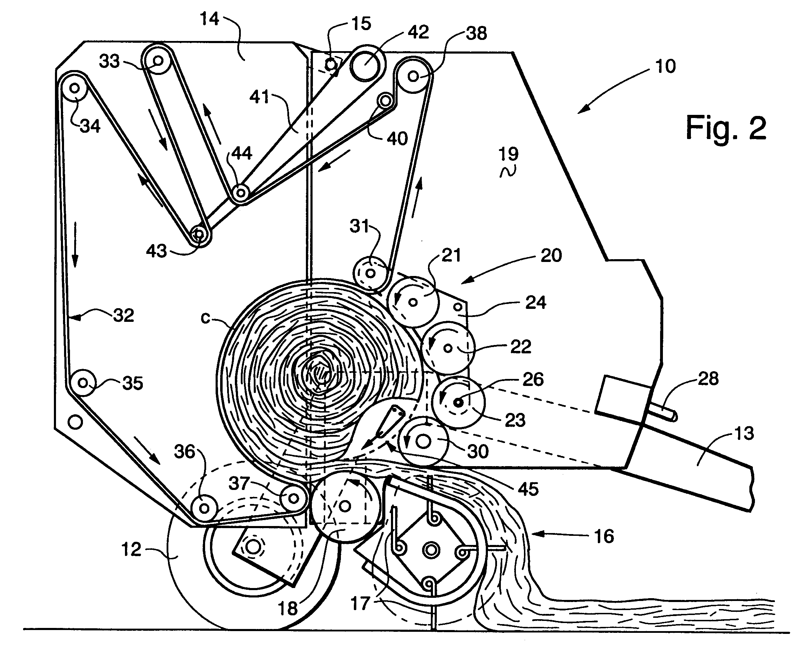

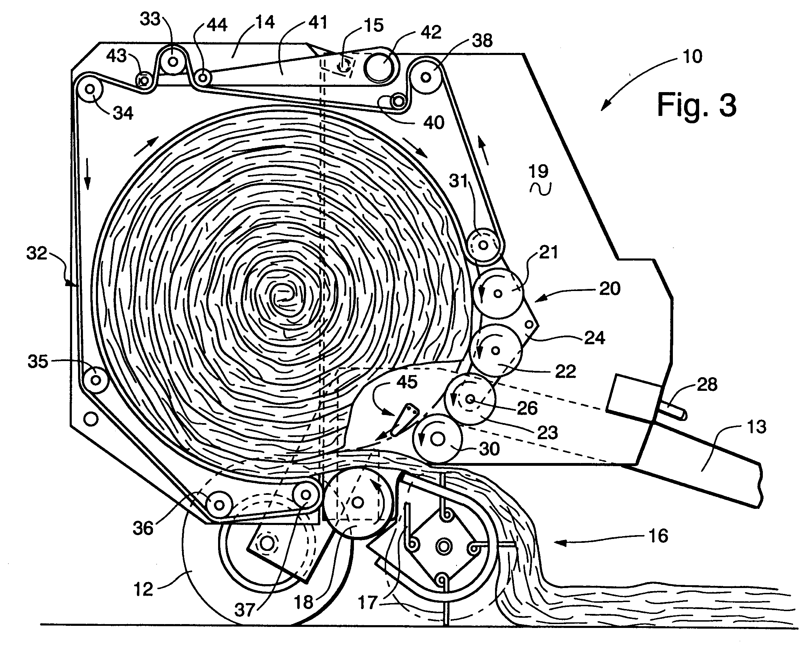

A chamber for forming bales is defined partly by a sledge assembly 20 comprising a plurality of transversely extending rollers 21, 22, 23 journalled at their ends in a pair of spaced apart arms 24, one of which is shown. These arms are pivotally mounted on stub shafts 26 for providing movement of sledge assembly 20 from the bale starting position shown in Figure 1 through the partly full position shown in Figure 2 to the full bale position shown in Figure 3. Rollers 21, 22, 23 are driven in a counter-clockwise direction by conventional means (for example, chains and sprockets) coupled to a drive shaft 28. A starter roll 30, located adjacent roller 23, is also driven counter-clockwise. A freely rotatable idler roller 31, carried by arms 24, moves in an arcuate path with sledge assembly 20.

The bale forming chamber is further defined by an apron 32 comprising a plurality of continuous side-by-side belts supported by guide rolls 33, 34, 35, 36, 37 rotatably mounted in tailgate 14. Apron 32 is also supported on a drive roll 38, mounted on main frame 11. Although apron 32 passes between roller 21 and idler roller 31, it is in engagement only with idler roller 31 and not roller 21 which serves to strip crop material from the belts, in addition to its bale forming function. Suitable coupling means (not shown) connected to drive shaft 28 provide rotation of drive roll 38 causing movement of apron 32 along the varying paths in the directions indicated by the arrows in Figures 1, 2 and 3. An additional guide roll 40 in the main frame 11 ensures proper driving engagement between apron 32 and drive roll 38. A pair of take up arms 41 (only one shown) are pivotally mounted on main frame 11 by a cross shaft 42 for movement between inner, intermediate and outer positions shown in Figures 1, 2 and 3, respectively. Take up arms 41, which carry additional guide rolls 43, 44 for supporting apron 32, are urged toward their inner positions (Figure 1), by conventional means, e.g. springs.

When the elements of round baler 10 are disposed as shown in Figure 1, an inner course c of apron 32 extends between guide roll 37 and idler roll 31 to form the rear wall of the core starting chamber while the inwardly facing peripheral surfaces of rollers 21, 22, 23 define in a general manner a rearwardly inclined cooperating front wall. Floor roll 18 defines the bottom of the chamber and with starter roller 30 provides an inlet for crop material.

When round baler 10 travels across a field, pick-up tines 17 lift crop material from the ground and deliver it through the inlet. The crop material is carried rearwardly by floor roll 18 into engagement with apron inner course c (Figure 1) which urges it upwardly and forwardly into engagement with the rollers on sledge 20. In this manner crop material is coiled in a clockwise direction to start a bale core. Continued feeding of crop material into the bale forming chamber by pick-up tines 17 causes the apron inner course c to expand in length around a portion of the circumference of the bale core as the diameter increases (Figure 2). Take up arms 41 rotate from their inner positions shown in Figure 1 toward their outer positions shown in Figure 3 to provide for expansion of the inner course of the apron in a well known manner, i.e., in effect the outer course of the belts of apron 32 is diminished in length while the inner course increases a like amount. After a bale has been formed and wrapped, tailgate 14 is opened and the bale is ejected rearwardly. Subsequent closing of tailgate 14 returns the inner and outer courses of the belts 32 to the locations shown in Figure 1.

During bale formation, sledge assembly 20 also moves between a bale starting position (Figure 1) to a full bale position (Figure 3). This movement of sledge assembly 20 causes idler roller 31 to move in an arcuate path while maintaining apron 32 in close proximity to roller 21, thereby allowing roller 21 to strip crop material from the belts and prevent or reduce significantly the loss of crop material between roller 21 and apron 32 during formation of a bale. Sledge assembly 20 is pushed outwardly towards its full bale position during bale formation as the crop material expands against rollers 21, 22, 23 and then subsequently is pulled inwardly by apron 32 to the position shown in Figure 1.

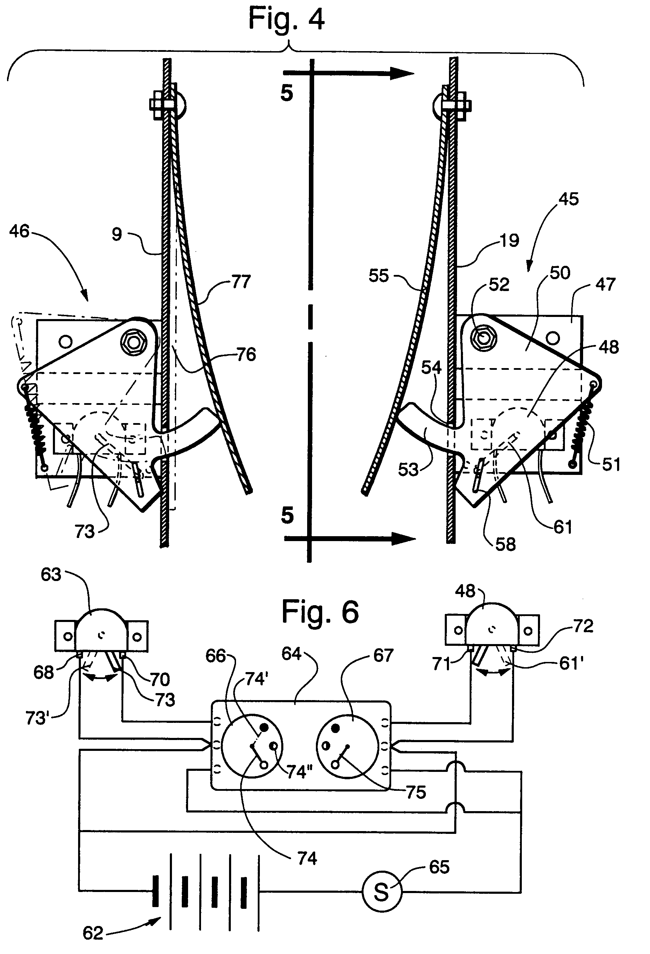

With the above description and general operation of baler 10 as a background, attention is directed to a sensor assembly 45 mounted on side wall 19, shown in Figures 1-3. Figure 4 shows a pair of sensor assemblies 45, 46, one of which is mounted on side wall 19, as shown in Figures 1-3, and the other of which is similarly mounted on the opposing side wall 9, not shown in Figures 1-3. For the purposes of this description, only assembly 45 will be described in detail but it is intended that like comments apply to assembly 46.

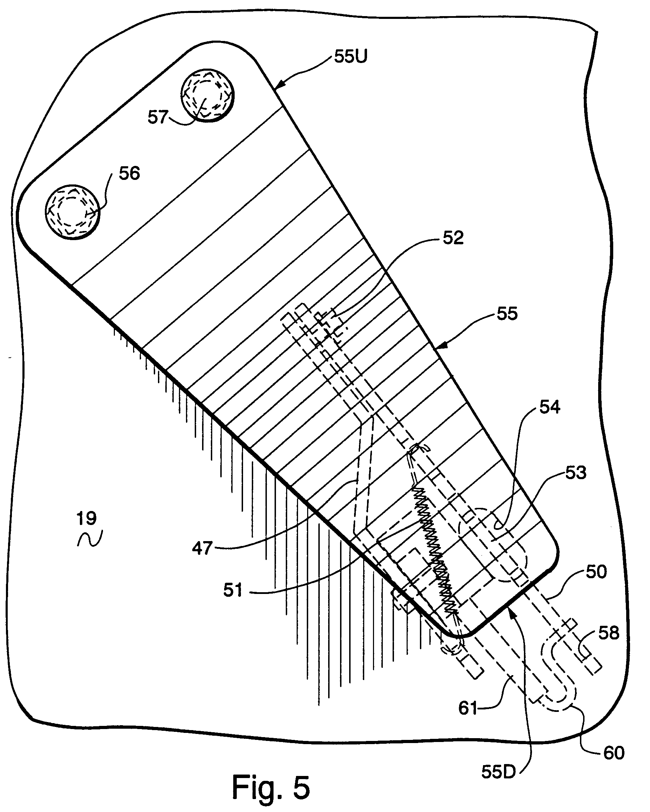

A bracket 47, affixed to the outside of side wall 19, has mounted thereon a potentiometer 48 and a sensor plate 50. A spring 51 engages plate 50 to urge it in a clockwise direction around a pivot 52, at which pivot plate 50 is mounted to bracket 47. The bias of spring 51 holds plate 50 against wall 19, through which an integral finger portion 53 extends (via aperture 54) against a leaf spring 55 secured to the inside of side wall 19 by conventional means such as bolts 56, 57 (see Figure 5). Spring 51 is designed to provide force sufficient to maintain leaf spring 55 in the position shown under inoperative conditions, i.e., no crop material in the chamber.

A slot 58, in plate 50 accommodates an actuator rod 60 extending from a control arm 61. When plate 50 swings about pivot 52, rod 60 traverses slot 58 and thereby moves control arm 61 from the solid position (Figure 6) to the phantom position, designated by 61'.

The schematic diagram in Figure 6 depicts a voltage source 62 connected to potentiometers 48, 63 and signal means 64 by an on/off switch 65. The positive and negative terminals of battery 62 are connected to signal devices 66, 67 which read the varying potential across terminals 68, 70 and 71, 72 of potentiometers 63, 48. When control arms 61, 73 are in the solid positions, i.e., inoperative condition, the signal devices so indicate via the corresponding solid position of indicator needles 74, 75. Variations in potential across the potentiometer terminals causes a like variation at the signal devices, until maximum travel of the control arm is reached. This is illustrated by the phantom position 76 of leaf spring 77, which corresponds to the phantom position 73' of control arm 73 which in turn corresponds to the resulting phantom position 74' of needle 74 of signal device 66.

In operation, as mentioned above crop material is picked up by pick-up 16 and conveyed by tines 17 to floor roll 18 which urges it against upwardly travelling course c of apron 32. When the bale forming chamber is empty (Figure 1) material begins to spiral in a clockwise direction until it engages the rollers of sledge assembly 20 which continues to roll it in a spiral fashion causing course c to expand through the position shown in Figure 2 to the full bale position shown in Figure 3. During this bale forming operation, crop material adjacent the side walls in the outer portion of the bale being formed is in continuous contact with leaf springs 55, 77 of sensor assemblies 45, 46. More specifically, crop material traverses the leaf springs in a longitudinal fashion from the upstream end 55U to the downstream end 55D, using spring 55 as an example. The crop material travels in a generally spiral path and urges leaf springs 77, 55 toward side walls 9, 19, respectively. The position of the control arms will vary based on the position of the leaf springs which will move toward or away from the side walls based on the force exerted by crop material passing thereover. This force is directly proportional to the degree of compactness of the crop material. The leaf springs in turn move the control arms of the potentiometers, thereby varying the potential in direct relationship to the compactness of the crop material being sensed which in turn is indicated by the signal means in the manner described above.

Thus, as the bale increases in diameter the compactness of the sides is monitored enabling the operator to, firstly, ascertain when the crop material has reached the desired level of compactness and, secondly, to modify the relative quantity of crop material being fed to the transverse sectors of the bale forming chamber in response to the relative levels indicated. For example, the predetermined acceptable range is reached when needle 74 is above point 74'' on signal device 66. After this level is attained the operator uses the signal means to indicate the degree of compactness on one side relative to the other and the operator will steer the baler accordingly to balance the levels indicated.

While preferred structure incorporating principles of the present invention is shown and described above, it is to be understood that the invention is not limited to such structure, but that, in fact, widely different means of varying scope and configuration may be employed within the scope of the claims in the practice of the invention.

## Claims

1. A round baler (10), comprising:
- a bale forming chamber, defined between a pair of side walls (9, 19);
- means (16, 18) for feeding crop material into said bale forming chamber; and
- a crop loading monitor, comprising signal means (64) and sensor means (45, 46), operably coupled with said signal means (64) and monitoring the compactness of a bale being formed in said bale forming chamber,
characterized in that said sensor means comprise at least one sensor (45/46) which is mounted on one of said pair of side walls (19, 9).

2. A round baler, according to claim 1, characterized in that said signal means (64) indicate when the compactness in said bale forming chamber changes.

3. A round baler, according to claim 1 or 2, characterized in that said signal means (64) indicate when the compactness of said crop material in said bale forming chamber reaches a predetermined, desired level.

4. A round baler, according to any of the preceding claims, characterized in that said sensor means (45, 46) monitor the compactness of the outer cylindrical layer of the bale being formed in said bale forming chamber.

5. A round baler, according to any of the preceding claims, characterized in that said sensor (45/46) includes:
- an element (55/77), extending from said side wall (19/9) into the path of said crop material for engagement therewith as the bale is being formed in said bale forming chamber; and
- means (56, 57) for mounting said element (55/77) for movement toward said side wall (19/9) under conditions where the compactness of said crop material increases in the vicinity of said element (55/77).

6. A round baler, according to claim 5, characterized in that said element comprises a leaf spring (55/77).

7. A round baler, according to claim 6, characterized in that said leaf spring (55) comprises an upstream end (55U) and a downstream end (55D) relative to the direction of movement of said bale being formed in said bale forming chamber, and said means (56, 57) for mounting includes means for securing said upstream end (55U) to its associated side wall (19).

8. A round baler, according to any of the preceding claims, characterized in that said signal means (64) include a first signal device (67) and a second signal device (66) corresponding respectively to first and second portions of said bale being formed in said bale forming chamber, each of said devices (67, 66) being operable independently of the other to monitor the relative compactness of said first and second portions.

9. A method of forming bales in a round baler (10) having a bale forming chamber, including a pair of side walls (9, 19) and a crop pick-up (16) for feeding crop material into said bale forming chamber, said method comprising the steps of:
- positioning said round baler (10) to pick up crop material with said pick-up (16); and
- feeding said picked up material into said bale forming chamber;
- sensing the compactness of said crop material in a certain region of the bale, which is formed after said crop material is fed into said bale forming chamber;
- generating a signal indicative of the compactness of said crop material in said region; and
- repositioning said round baler (10) in response to said signal to maintain said compactness at a predetermined level
said method being characterized in that said region is at an end surface of the bale, adjacent said side walls (9, 19).

10. A method according to claim 9, characterized in that the generating step is performed by continuously generating a signal indicative of the compactness of crop material in said region during bale formation.

11. A method according to claim 9 or 10, characterized in that said generating step is performed by generating signal indicative of the compactness of both ends of the bale as it is being formed, and by indicating the relative degree of compactness above said predetermined level.

12. A method according to claim 11, characterized in that the repositioning step is performed by repositioning the baler in response to said signals indicative of the relative level of compactness above said predetermined level, and by steering the baler to the side at which the lower level of compactness is indicated.

13. A method according to any of the claims 9 to 12, characterized in that:
- the bale forming chamber is expandable during bale formation and the feeding step is performed by feeding crop material along a spiral path after it has entered said bale forming chamber; and
- the sensing step is performed by sensing the compactness of crop material as the spiral path passes through at least one of said regions.

## Patentansprüche

1. Rundballenpresse (10) mit:
- einer Ballenformungskammer, die zwischen zwei Seitenwänden (9,19) gebildet ist,
- Einrichtungen (16,18) zur Zuführung von Erntematerial in die Ballenformungskammer, und
- eine Erntematerial-Beladungs-Überwachungseinrichtung mit Anzeige-Einrichtungen (64) und Sensor-Einrichtungen (45, 46), die betriebsmäßig mit den Anzeige-Einrichtungen (64) gekoppelt sind und die Kompaktheit eines in der Ballenformungskammer gebildeten Ballens überwachen,
dadurch gekennzeichnet, daß die Sensor-Einrichtungen zumindest einen Sensor (45/46) umfassen, der auf einer der beiden Seitenwände (19,9) befestigt ist.

2. Rundballenpresse nach Anspruch 1,
dadurch gekennzeichnet, daß die Anzeige-Einrichtungen (64) anzeigen, wenn sich die Kompaktheit in der Ballenformungskammer ändert.

3. Rundballenpresse nach Anspruch 1 oder 2,
dadurch gekennzeichnet, daß die Anzeige-Einrichtungen (64) anzeigen, wenn die Kompaktheit des Erntematerials in der Ballenformungskammer einen vorgegebenen gewünschten Wert erreicht.

4. Rundballenpresse nach einem der vorhergehenden Ansprüche,
dadurch gekennzeichnet, daß die Sensor-Einrichtungen (45, 46) die Kompaktheit der äußeren zylindrischen Schicht des in der Ballenformungskammer geformten Ballens überwachen.

5. Rundballenpresse nach einem der vorhergehenden Ansprüche,
dadurch gekennzeichnet, daß der Sensor (45/46) folgende Teile einschließt:
- ein Element (55/77), das sich von der Seitenwand (19/9) in die Bewegungsbahn des Erntematerials für einen Eingriff mit diesem erstreckt, während der Ballen in der Ballenformungskammer geformt wird, und
- Einrichtungen (56, 57) zur Befestigung des Elementes (55/77) für eine Bewegung in Richtung auf die Seitenwand (19/9) unter Bedingungen, bei denen sich die Kompaktheit des Erntematerials in der Nähe des Elementes (55/77) vergrößert.

6. Rundballenpresse nach Anspruch 5,
dadurch gekennzeichnet, daß das Element eine Blattfeder (55/77) umfaßt.

7. Rundballenpresse nach Anspruch 6,
dadurch gekennzeichnet, daß die Blattfeder (55) ein strömungsaufwärts gelegenes Ende (55U) und ein strömungsabwärts gelegenes Ende (55D) bezüglich der Bewegungsrichtung des in der Ballenformungskammer geformten Ballens umfaßt, und daß die Einrichtungen (56, 57) zur Befestigung Einrichtungen zur Befestigung des strömungsaufwärts gelegenen Endes (55U) an seiner zugehörigen Seitenwand (19) einschließen.

8. Rundballenpresse nach einem der vorhergehenden Ansprüche,
dadurch gekennzeichnet, daß die Anzeige-Einrichtungen (64) eine erste Anzeige-Einrichtung (67) und eine zweite Anzeige-Einrichtung (66) einschließen, die jeweils ersten und zweiten Teilen des in der Ballenformungskammer geformten Ballens entsprechen, wobei jede der Einrichtungen (67, 66) unabhängig von der anderen betreibbar ist, um die relative Kompaktheit der ersten und zweiten Teile zu überwachen.

9. Verfahren zur Formung von Ballen in einer Rundballenpresse (10) mit einer Ballenformungskammer, die zwei Seitenwände (9, 19) und ein Erntematerial-Aufnehmergerät (16) zur Zuführung von Erntematerial in die Ballenformungskammer einschließt, wobei das Verfahren die folgenden Schritte umfaßt:
- Anordnung der Rundballenpresse (10) derart, daß sie Erntematerial mit dem Aufnehmergerät (16) aufnimmt, und
- Zuführen des aufgenommenen Materials in die Ballenformungskammer,
- Messen der Kompaktheit des Erntematerials in einem bestimmten Bereich des Ballens, der nach der Zuführung des Erntematerials in die Ballenformungskammer gebildet wird,
- Erzeugen eines die Kompaktheit des Erntematerials in diesem Bereich anzeigenden Signals, und
- Neuanordnen der Rundballenpresse (10) in Abhängigkeit von dem Signal, um die Kompaktheit auf einem vorgegebenen Wert zu halten,
wobei das Verfahren dadurch gekennzeichnet ist, daß sich der Bereich an einer Endoberfläche des Ballens benachbart zu den Seitenwänden (9, 19) befindet.

10. Verfahren nach Anspruch 9,
dadurch gekennzeichnet, daß der Schritt des Erzeugens eines Signals durch kontinuierliches Erzeugen eines Signals ausgeführt wird, das die Kompaktheit des Erntematerials in dem Bereich während der Ballenformung anzeigt.

11. Verfahren nach Anspruch 9 oder 10,
dadurch gekennzeichnet, daß der Schritt der Erzeugung des Signals durch Erzeugen von Signalen ausgeführt wird, die die Kompaktheit beider Enden des Ballens anzeigen, während dieser geformt wird, und durch Anzeigen des relativen Ausmaßes der Kompaktheit oberhalb des vorgegebenen Wertes.

12. Verfahren nach Anspruch 11,
dadurch gekennzeichnet, daß der Neuanordnungsschritt durch Neuanordnung der Ballenpresse in Abhängigkeit von den Signalen, die den relativen Wert der Kompaktheit oberhalb des vorgegebenen Wertes anzeigen, und durch Lenken des Ballens zu der Seite hin ausgeführt wird, an der der niedrigere Wert an Kompaktheit angezeigt ist.

13. Verfahren nach einem der Ansprüche 9 bis 12,
dadurch gekennzeichnet, daß:
- die Ballenformungskammer während der Ballenformung ausdehnbar ist, und der Zuführungsschritt durch Zuführen von Erntematerial entlang einer spiralförmigen Bahn ausgeführt wird, nachdem das Erntematerial in die Ballenformungskammer eingetreten ist, und
- der Meßschritt durch Messen der Kompaktheit des Erntematerials durchgeführt wird, während die spiralförmige Bahn durch zumindest einen der Bereiche verläuft.

## Revendications

1. Machine de mise en balles rondes (10) comprenant:
- une chambre de formation de botte, définie entre une paire de parois latérales (9, 19);
- un moyen (16, 18) d'alimentation de matériau de récolte dans ladite chambre de formation de botte; et
- un moniteur de chargement de matériau de récolte, comprenant un moyen de signalisation (64) et un moyen de détection (45, 46) associé fonctionnellement avec ledit moyen de signalisation (64), et surveillant la compacité de la botte en élaboration dans ladite chambre de formation de botte,
caractérisée en ce que ledit moyen de détection comprend au moins un détecteur (45/46) monté sur une paroi de ladite paire de parois latérales (19, 9).

2. Machine de mise en balles rondes selon la revendication 1, caractérisée en ce que ledit moyen de signalisation (64) indique quand la compacité dans ladite chambre de formation de botte varie.

3. Machine de mise en balles rondes selon la revendication 1 ou 2, caractérisée en ce que ledit moyen de signalisation (64) indique quand la compacité dudit matériau de récolte dans ladite chambre de formation de botte atteint un niveau prédéterminé souhaité.

4. Machine de mise en balles rondes selon l'une quelconque des revendications précédentes, caractérisée en ce que ledit moyen de détection (45, 46) surveille la compacité de la couche cylindrique supérieure de la botte en formation dans ladite chambre de formation de botte.

5. Machine de mise en balles rondes selon l'une quelconque des revendications précédentes, caractérisée en ce que ledit détecteur (45/46) comprend:
- un élément (55/77), s'étendant à partir de ladite paroi (19/9) latérale suivant le trajet dudit matériau de récolte afin d'entrer en contact avec ce dernier lorsque la botte est en formation dans ladite chambre de formation de botte; et
- des moyens (56, 57) de montage dudit élément (55/77) permettant son mouvement en direction de ladite paroi (9/19) latérale dans les conditions où la compacité dudit matériau de récolte augmente à proximité dudit élément (55/77).

6. Machine de mise en balles rondes selon la revendication 5, caractérisée en ce que ledit élément comprend un ressort (55/77) à lame.

7. Machine de mise en balles rondes selon la revendication 6, caractérisée en ce que ledit ressort (55) à lame comprend une extrémité (55U) amont et une extrémité (55D) aval par rapport à la direction du mouvement de ladite botte en formation dans ladite chambre de formation de botte, et lesdits moyens (56, 57) de montage pour fixer ladite extrémité (55U) amont à sa paroi (19) latérale associée.

8. Machine de mise en balles rondes selon l'une quelconque des revendications précédentes, caractérisée en ce que ledit moyen (67) de signalisation comprend un premier système (67) de signalisation et un second système (66) de signalisation correspondant respectivement aux première et seconde zones de ladite botte dans ladite chambre de formation de botte, chacun desdits systèmes (67, 66) pouvant fonctionner indépendamment l'un de l'autre pour surveiller la compacité relative desdites première et seconde zones.

9. Méthode d'élaboration de bottes dans une machine de mise en balles rondes (10) possédant une chambre de formation de botte, comprenant une paire de parois latérales (9, 19) et une ramasseuse de matériau de récolte (16) pour l'alimentation de matériau de récolte dans ladite chambre de formation de botte, ladite méthode comprenant les étapes de:
- positionnement de ladite machine de mise en balles rondes (10) pour ramasser le matériau de récolte avec ladite ramasseuse (16); et
- introduction dudit matériau ramassé dans ladite chambre de formation de botte;
- détection de la compacité dudit matériau de récolte dans une certaine zone de la botte formée après l'introduction dudit matériau de récolte dans ladite chambre de formation de botte;
- génération d'un signal indicatif de la compacité dudit matériau de récolte dans ladite zone;
et
- repositionnement de ladite machine de mise en balles rondes (10) en fonction dudit signal afin de maintenir ladite compacité à un niveau prédéterminé.
ladite méthode étant caractérisée en ce que ladite zone se trouve à une surface extérieure de la botte, jouxtant lesdites parois latérales (9, 19).

10. Méthode selon la revendication 9, caractérisée en ce que l'étape de génération est effectuée en générant en continu un signal indicatif de la compacité du matériau de récolte dans ladite zone pendant la formation de la botte.

11. Méthode selon la revendication 9 ou 10, caractérisée en ce que ladite étape de génération est effectuée en générant un signal indicatif de la compacité des deux extrémités de la botte, et en indiquant le degré relatif de compacité au-delà dudit niveau prédéterminé.

12. Méthode selon la revendication 11, caractérisée en ce que l'étape de repositionnement est réalisée par le repositionnement de la machine de mise en balles en fonction desdits signaux indicatifs du niveau relatif de compacité au-delà dudit niveau prédéterminé, et en dirigeant la machine de mise en balles vers le coté pour lequel le niveau inférieur de compacité est indiqué.

13. Méthode selon l'une quelconque des revendications 9 à 12, caractérisée en ce que:
- la chambre de formation de botte est expansible pendant la formation de la botte et l'étape d'introduction est effectuée en introduisant du matériau de récolte suivant un trajet en spirale après son entrée dans ladite chambre de formation de botte;
et
- l'étape de détection est effectuée en détectant la compacité du matériau de récolte lorsque le trajet en spirale passe par au moins l'une desdites zones.
